# FASCICULE DE BREVET EUROPEEN

(11) **EP 2 716 005 B1**
(45) Date de publication et mention de la délivrance du brevet: **12.07.2017**
(21) Numéro de dépôt: 12731659.4
(22) Date de dépôt: 24.05.2012
(51) Int. Cl.: H04L 29/06, G06F 21/00

(54) **PROCÉDÉ ET SYSTÈME DE SÉCURISATION D'ÉCHANGES DE DONNÉES ENTRE UN MODULE CLIENT ET UN MODULE SERVEUR**
VERFAHREN UND SYSTEM ZUR SICHERUNG EINES DATENAUSTAUSCHS ZWISCHEN EINEM CLIENTMODUL UND EINEM SERVERMODUL
METHOD AND SYSTEM FOR SECURING DATA EXCHANGES BETWEEN A CLIENT MODULE AND A SERVER MODULE

(30) Priorité: 27.05.2011 FR 1101652
(43) Date de publication de la demande: 09.04.2014
(73) Titulaire: Symeos, 63000 Clermont-Ferrand (FR)
(72) Inventeur: PROT, Hervé, F-63000 Clermont-Ferrand (FR)
(74) Mandataire: Gabriel, Franck
(86) Numéro de dépôt international: PCT/IB2012/001028
(87) Numéro de publication internationale: WO 2012/164368

(56) Documents cités:
- WO-A1-01/23980
- WO-A2-03/015370

## Description

### DOMAINE TECHNIQUE DE L'INVENTION

La présente invention concerne un procédé de sécurisation d'échange de données entre un module client et un module serveur. Elle concerne également le système correspondant d'échange de données entre un module client et un module serveur.

### ETAT DE LA TECHNIQUE ANTERIEURE

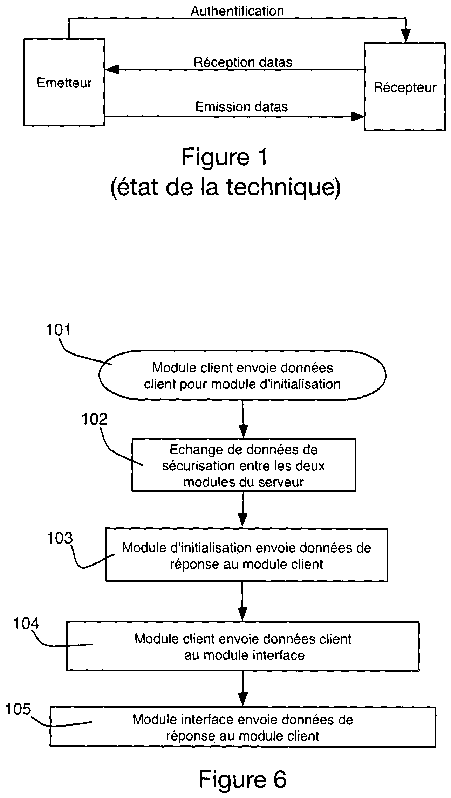

On connaît de multiples exemples de réalisation de systèmes et procédés permettant d'assurer un certain niveau de sécurisation pour éviter que des personnes non autorisées puissent accéder à des données ou des applications qui ne leur sont pas destinées. Par exemple, la figure 1 illustre un exemple de procédé de sécurisation de données de type connu. Un émetteur ou client fait une demande d'authentification à un récepteur. Le récepteur vérifie l'identifiant et un éventuel code tel qu'un code NIP (numéro d'identification personnel, en anglais « PIN » pour « personal identification number »). Si l'identité est reconnue, le récepteur envoie à l'émetteur les données pertinentes, comme par exemple les données correspondant à un compte bancaire, ou tout autre type de compte utilisateur. Tant que la connexion n'est pas interrompue, l'émetteur peut effectuer des requêtes au récepteur, qui envoie les données demandées. On observe que ce type de procédé est particulièrement vulnérable aux attaques du type HDM « homme du milieu » (mieux connu en anglais par le terme MITM « man in the middle ») et/ou du type hameçonnage (en anglais « Phishing »). Dans le premier cas, un tiers peut intercepter les transferts de données entre les deux entités, et ainsi obtenir une série de données à l'insu de ces entités. Il peut même émettre une requête en se substituant à l'émetteur. Dans le second cas, un intrus se fait passer pour un récepteur digne de confiance, souvent un centre de service connu de l'émetteur. L'intrus demande des données confidentielles. L'émetteur, croyant communiquer avec un récepteur fiable, transmet les données, souvent sans même détecter l'action frauduleuse immédiatement. Du fait de la très forte croissance récente des échanges de données entre des utilisateurs et de serveurs de tous genres, échangeant souvent des données confidentielles ou sensibles, et du fait du nombre croissant de personnes malveillantes, voire de personnes cherchant volontairement à accéder à des données de tiers, de nombreuses technologies de sécurisation ont récemment été développées.

Le document FR 2 806 229A1 décrit un procédé d'interaction ou de transaction entre un utilisateur et un fournisseur de produits ou services, par l'intermédiaire d'un réseau de transmission de données accessible à des tiers. Ce procédé est du type nécessitant une autorisation préalable, subordonnée à la présentation par l'utilisateur de moyens de preuve de son habilitation, comportant des coordonnées d'habilitation, et à un contrôle de ces coordonnées. Le procédé prévoit de faire transiter par le réseau seulement une partie desdites coordonnées, qui à elle seule est insuffisante pour l'autorisation de la fourniture des produits ou services, après avoir mémorisé préalablement l'autre partie dans un organisme intermédiaire de sécurisation, et réunit pour ledit contrôle les deux parties de coordonnées. Un tel procédé est contraignant car il implique la mise en place d'un tiers de confiance, qui implique du matériel, des coûts de fonctionnement, des risques de dysfonctionnement et de non fiabilité, etc.

Le document FR 2 828 309A1 décrit un procédé de transaction utilisant un terminal client, un terminal prestataire, un serveur central et un centre gestionnaire connectés par le réseau téléphonique. La transaction est sécurisée par le fait que le client communique au prestataire son numéro de téléphone, lequel prestataire communique au serveur central ce numéro de téléphone et les données de la transaction envisagée, le serveur central gérant la suite des échanges d'informations en demandant confirmation au client, et en s'adressant ensuite au centre gestionnaire pour obtenir un mini message de validation qui est ensuite transmis sur le terminal prestataire. On assure ainsi la sécurité des clients qui ne transmettent pas leur numéro de carte bancaire, des prestataires qui sont assurés d'une transaction valide, et des centres gestionnaires tels que les banques qui sont assurées d'un accord du client. Ce procédé implique un gestionnaire, avec un matériel correspondant et des étapes dédiées à la communication avec ce tiers.

D'autres procédés impliquent l'usage de moyens techniques spécifiques. Par exemple, le document WO 2008/060725 prévoit l'utilisation d'un lecteur biométrique, prévu pour identifier un utilisateur. Ce type de système est peu pratique du fait qu'il requiert un matériel approprié. Les sites existants doivent donc être équipés avant de pouvoir être considérés pour une mise en oeuvre du procédé.

Le document WO 03/015370 décrit un procédé et un dispositif permettant d'effectuer une signature électronique de données. Le dispositif prévoit un serveur centralisant les clés privées d'une pluralité d'utilisateurs. Les utilisateurs utilisent une station de travail pour contacter le serveur de signature. Selon le procédé décrit, la station de travail contacte le serveur de signature, qui contacte à son tour un serveur d'authentification. Ce dernier transmet un mot de passe ou un jeton d'une part à l'utilisateur via un lien de communication distinct de la station de travail, et d'autre part au serveur de signature. Dans ce dernier cas, le mot de passe ou jeton transmis est une variante de celui envoyé à l'utilisateur. L'utilisateur transmet le mot de passe ou jeton reçu au serveur de signature. Ce dernier effectue une comparaison des mots de passe ou jetons reçus par le serveur d'authentification et par l'utilisateur. Si les données correspondent, le serveur de signature effectue une signature électronique des données fournies par l'utilisateur. Selon ce procédé, le serveur d'authentification contacte l'utilisateur par un élément ou module distinct de la station de travail, comme par exemple par SMS envoyé sur un téléphone portable. En effet, ce serveur ne serait pas en mesure d'initialiser lui-même une communication avec la station de travail. Ce procédé n'est pas en soit un procédé de transmission de données, mais uniquement un procédé de signature de données. La signature est effectuée sur le serveur central de façon à éviter à l'utilisateur de conserver sa clé privée de signature de façon sécurisée. Par ailleurs, ni l'utilisateur, ni la station de travail ne génèrent de jeton. Si un jeton est généré, il provient de la station d'authentification qui le transmet à l'utilisateur. Ce procédé présente l'inconvénient d'être sensible aux éventuelles attaques d'un Homme au Milieu (« Man in the Middle »).

Le document WO 01/23980 décrit un procédé et un dispositif dans lesquels une plate-forme client est adaptée pour assurer une utilisation sécurisée des données reçues d'un serveur, et le serveur est adapté pour vérifier que la plate-forme client prévue pour recevoir des données est bien configurée selon le mode sécurisé prévu avant de transmettre les données via un lien sécurisé.

En outre, les systèmes et procédés connus sont peu efficaces contre la plupart des attaques et intrusions par hameçonnage, et surtout, aucun système ou procédé actuel ne permet de générer de protection véritablement efficace contre les attaques ou intrusions du type « MITM ».

Pour pallier ces différents inconvénients, l'invention prévoit différents moyens techniques.

### EXPOSE DE L'INVENTION

Tout d'abord, un premier objet de l'invention consiste à prévoir un procédé et un système de sécurisation d'échange de données entre un module utilisateur ou client et un module serveur permettant de lutter de façon efficace contre différents types d'intrusion, de piratage ou d'attaque en provenance de sources connues ou non.

Un autre objet de l'invention consiste à prévoir un système et un procédé de sécurisation d'échange de données entre un module utilisateur ou client et un module serveur permettant de lutter de façon efficace à la fois contre des attaques du type «MITM» et contre le hameçonnage.

Encore un autre objet de l'invention consiste à prévoir un système et un procédé de sécurisation d'échange de données entre un module utilisateur ou client et un module serveur permettant d'atteindre un très haut niveau de sécurité, sans pour autant requérir des infrastructures lourdes et coûteuses à mettre en place, ni devoir faire appel à du matériel spécifique.

Encore un autre objet de l'invention consiste à prévoir un système et un procédé de sécurisation d'échange de données entre un module utilisateur ou client et un module serveur permettant d'atteindre un très haut niveau de sécurité, sans ralentir les vitesses de transfert de données de façon significative.

Encore un autre objet de l'invention consiste à prévoir un système et un procédé de sécurisation d'échange de données entre un module utilisateur et un module serveur permettant d'atteindre un très haut niveau de sécurité, sans requérir de manoeuvre ou opérations complexes pour les utilisateurs.

Pour ce faire, l'invention prévoit un procédé de sécurisation d'échange de données entre un module client comportant un module jeton, un module serveur et un module destinataire, dans lequel le module serveur comporte un ensemble de modules de sécurisation comportant au moins un premier et un second modules de sécurisation, le procédé comportant les étapes dans lesquelles :
- le module jeton du module client initialise un jeton et le module client envoie des données comprenant un identifiant unique et le jeton initialisé à un premier module de sécurisation du module serveur ;
- le premier module de sécurisation du module serveur reçoit les données et vérifie l'identifiant unique et le jeton reçu ;
- le premier module de sécurisation et le second module de sécurisation échangent bilatéralement entre eux des données de sécurisation ;
- le module serveur transforme le jeton reçu ;
- le premier module de sécurisation du module serveur envoie des données contenant le jeton transformé au module client ;
- le module client reçoit les données serveur contenant le jeton transformé, vérifie le jeton et, s'il est accepté, transforme ce dernier une nouvelle fois ;
- le module client envoie des données comportant l'identifiant unique et le jeton transformé au second module de sécurisation du module serveur ;
- le second module de sécurisation du module serveur reçoit les données, vérifie l'identifiant et le jeton transformé ;
- le second module de sécurisation communique avec le module destinataire ;
- le module destinataire répond.

Grâce à un tel procédé, l'invention prévoit d'une part une approche véritablement triangulaire, avec d'une part un module client assurant la totalité des échanges avec le serveur, et d'autre part une génération de jeton par le module client avant le début des transmissions des échanges de données. Le procédé prévoit par ailleurs que le jeton soit transformé à chaque fois que les données changent de module. Enfin, le fait que les échanges sont prévus de l'utilisateur vers le serveur, puis en sens inverse, et une nouvelle fois de l'utilisateur vers l'autre module du serveur, permet d'effectuer une vérification du jeton tant par le premier module du serveur que par le module client, et enfin par le second module du serveur. Ainsi, si une attaque de type «MitM» se produit, elle est détectée par l'un ou l'autre des modules lors de la vérification du jeton. Le procédé permet de s'assurer que les jetons proviennent de sources autorisées. La séparation des échanges entre une pluralité de modules de sécurisation permet d'obtenir un niveau de sécurisation en adéquation avec les risques inhérents aux attaques du type MITM et/ou « phishing ».

La ou les réponses du module destinataire peuvent être transmises de diverses façons, selon les cas. Dans un premier exemple de réalisation, le module destinataire répond au second module de sécurisation qui transmet les données pertinentes au module client. Dans un autre exemple de réalisation, le module destinataire répond directement au module client.

De manière avantageuse, le jeton du serveur est initialisé ou transformé par le second module de sécurisation de données et transmis au premier module de sécurisation de données.

Egalement de manière avantageuse, après réception par un module d'un jeton, ce dernier est transformé ou réinitialisé. Dans une variante de réalisation, le jeton est transformé en y intégrant ou en utilisant un code utilisateur comme paramètre de transformation.

Dans une variante de réalisation, les données échangées entre le module client et le module serveur comportent une signature électronique, permettant de rehausser le niveau de sécurisation.

Dans une autre variante de réalisation, après l'envoi des données destinataire au module client, ledit module client effectue au moins un autre envoi des données au second module de sécurisation de données du module serveur.

De manière avantageuse, lors d'une itération entre le module client et le second module de sécurisation de données, les dernières données envoyées du destinataire comportent un jeton distinct du jeton précédent.

Selon une variante avantageuse, le module client et le second module de sécurisation de données du module serveur échangent tour à tour des données, avec à chaque boucle d'échange, un échange intermédiaire entre le second module de sécurisation de données et le module destinataire.

Selon une autre variante de réalisation, le module client et le module destinataire échangent tour à tour des données.

Selon encore un autre mode de réalisation, avant d'autoriser l'envoi par le module client du message contenant un jeton, le module client reçoit un code utilisateur (NIP). Une vérification est ensuite effectuée par le module de vérification.

En utilisant une architecture en triangle, les intrusions du type « MITM » et « Phishing » peuvent être écartées de façon fiable. La séparation du module serveur en au moins deux modules de sécurisation permet de partager les échanges et de vérifier les identités du client et du serveur de façon réciproque, pour un maximum de sécurisation. Ainsi, la séparation des échanges entre une pluralité de modules de sécurisation permet d'obtenir un niveau de sécurisation en adéquation avec les risques inhérents aux attaques du type MITM et/ou « phishing ». L'arrangement triangulaire est particulièrement efficace contre les attaques du type « MITM ».

### DESCRIPTION DES FIGURES

Tous les détails de réalisation sont donnés dans la description qui suit, complétée par les figures 1 à 11, présentées uniquement à des fins d'exemples non limitatifs, et dans lesquelles:
- la figure 1 est une représentation schématique d'un système d'échange de données de type connu;
- les figures 2 à 5 montrent schématiquement divers exemples de réalisation de systèmes de sécurisation d'échange de données conformes à l'invention, les différentes étapes impliquant des échanges de données entre les différents modules étant indiquées par des flèches numérotées selon l'ordre normal des opérations du procédé ; ainsi,

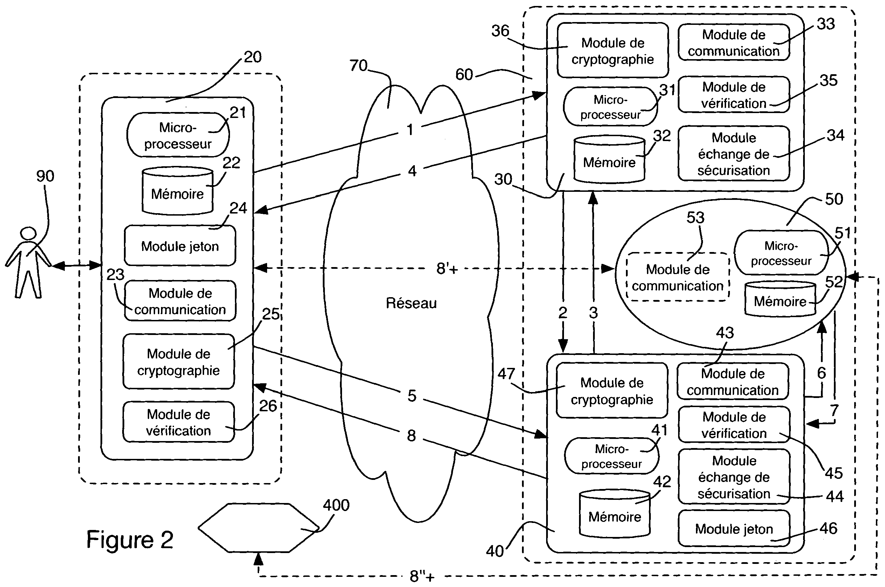

- la figure 2 est une représentation schématique d'un premier exemple de réalisation d'un système de sécurisation d'échanges de données selon l'invention;

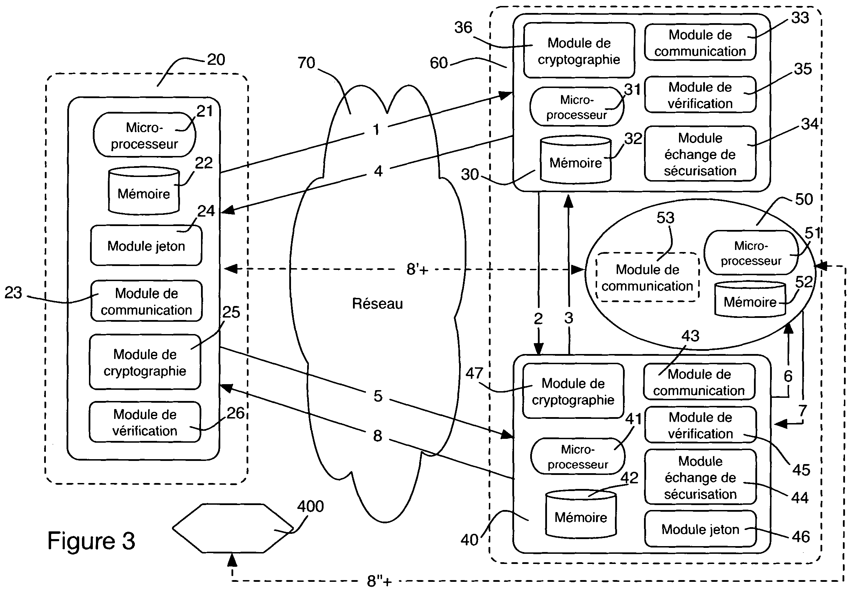

- la figure 3 est une représentation schématique d'un deuxième exemple de réalisation d'un système de sécurisation d'échanges de données selon l'invention, susceptible de fonctionner de façon automatique;

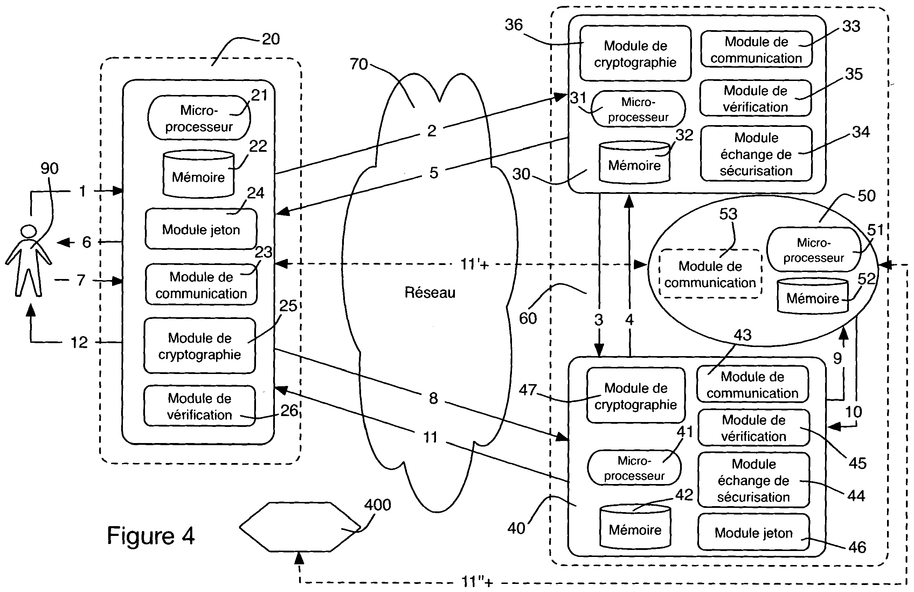

- la figure 4 est une représentation schématique d'une variante de réalisation d'un système de sécurisation d'échanges de données conforme à la figure 2 ;

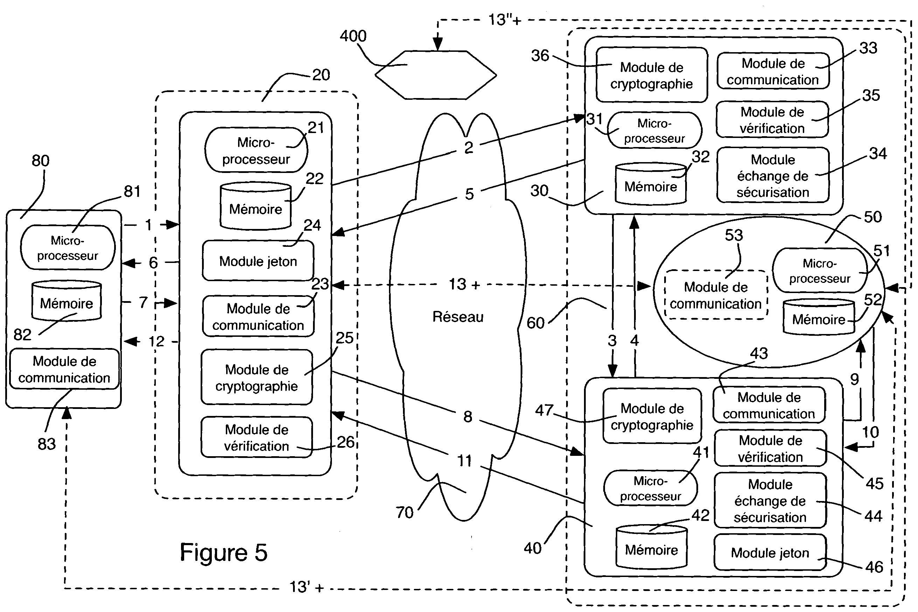

- la figure 5 est une représentation schématique d'une variante de réalisation d'un système de sécurisation d'échanges de données conforme à la figure 3;
- la figure 6 présente un organigramme fonctionnel présentant les principales étapes du procédé de sécurisation d'échanges de données conforme à l'invention;

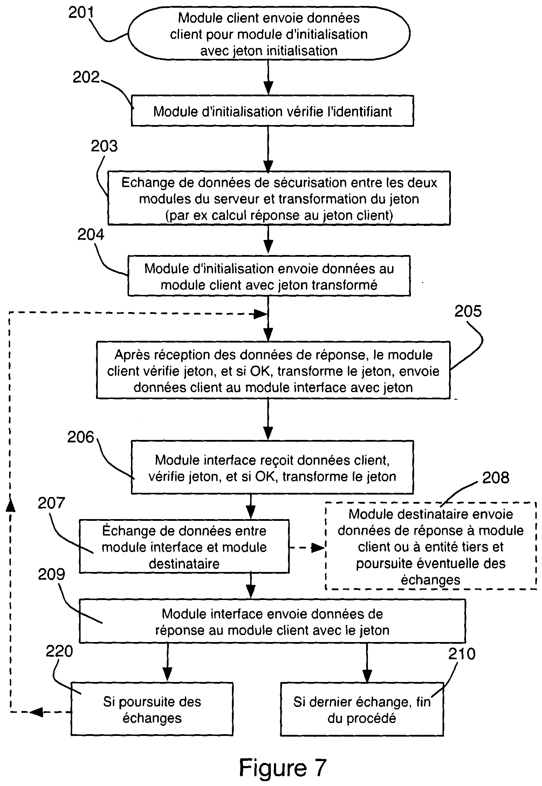

- la figure 7 montre un organigramme fonctionnel présentant une variante de réalisation du procédé de sécurisation d'échanges de données conforme à l'invention;

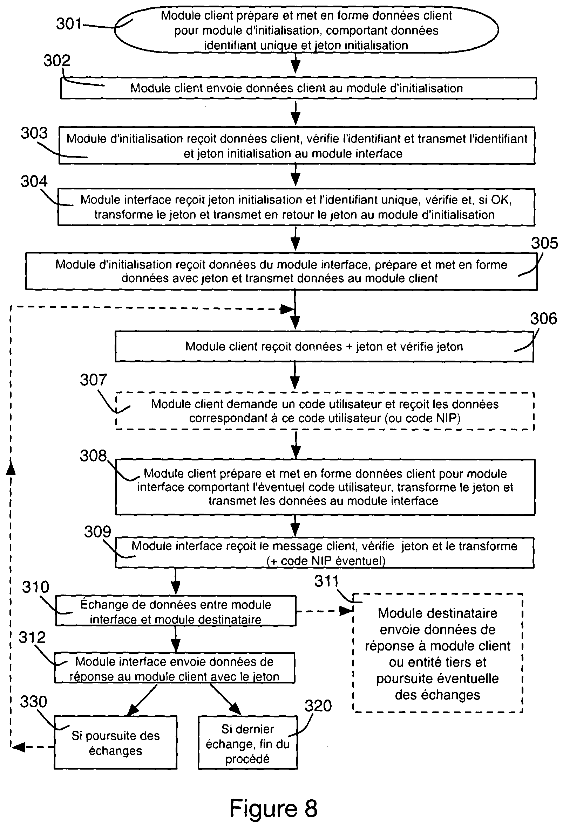

- la figure 8 montre un organigramme fonctionnel présentant une autre variante de réalisation du procédé de sécurisation d'échanges de données conforme à l'invention;

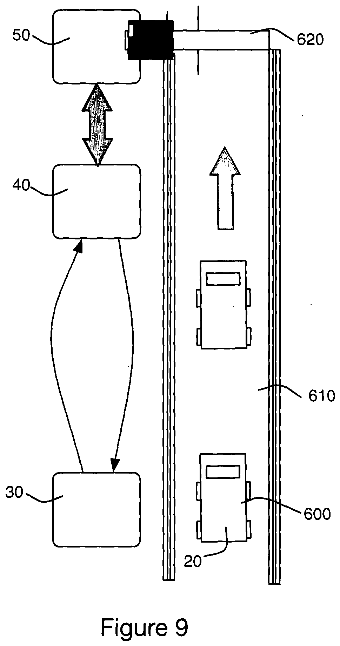

- la figure 9 montre de façon schématique un exemple d'application du procédé selon l'invention pour l'identification des véhicules à un poste de péage;

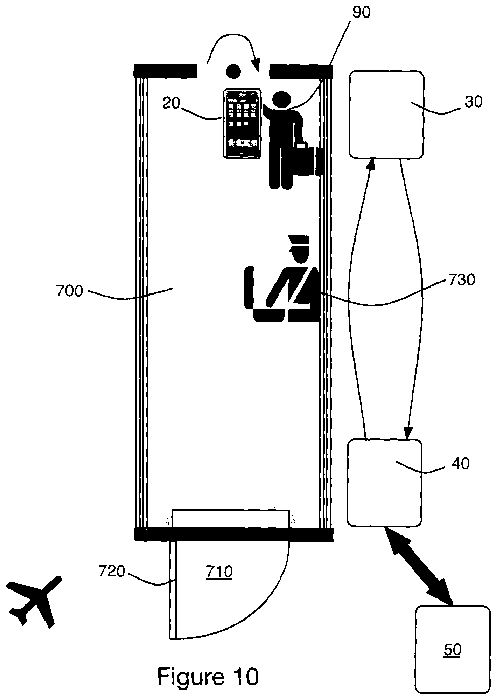

- la figure 10 montre de façon schématique un autre exemple d'application du procédé selon l'invention pour une utilisation d'un billet électronique, dans ce cas pour assurer l'ouverture d'une porte donnant accès à une zone à accès contrôlé;

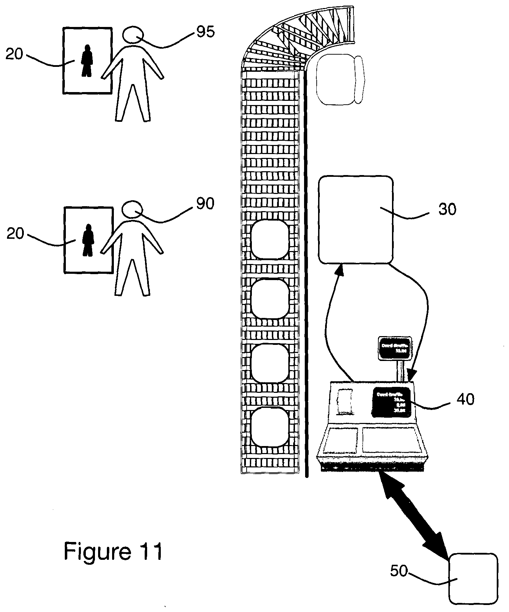

- la figure 11 montre de façon schématique un autre exemple d'application du procédé selon l'invention pour une application de paiement sécurisé à une caisse d'un supermarché ou autre type de commerce.

### DESCRIPTION DETAILLEE DE L'INVENTION

La figure 2 illustre un exemple de système de sécurisation de données entre un module client et un module serveur selon l'invention. Un module client 20, permet à un utilisateur de communiquer avec un module serveur 60, dans le but d'effectuer des échanges de données.

Le module client 20 comporte une unité de calcul tel qu'un microprocesseur 21 et une mémoire de travail 22, un module de communication 23 et un module jeton 24. Selon diverses variantes de réalisation, l'unité de calcul 21, tout comme la mémoire de travail 22 peuvent être centralisés pour l'ensemble du module client 20, ou encore être agencés de façon externe, avec connexion aux différents modules, ou répartis au sein de chacun des modules communication 23 et jeton 24. Un module de vérification 26 permet de vérifier l'identifiant, comme par exemple un identifiant inséré dans le message en provenance du module client, et une éventuelle signature des données du message.

Le module de communication 23 est prévu pour effectuer des transferts de données entre le module client 20 et un ou plusieurs serveurs 60 situés à distance, et reliés par un réseau 70 filaire, hertzien ou autre. Le module jeton 24 est prévu pour générer et/ou transformer et/ou réinitialiser des jetons. Selon le mode de réalisation prévu, les jetons peuvent prendre diverses formes et/ou formats. Dans un mode de réalisation préférentiel, les jetons sont des nombres aléatoires.

Dans cet exemple, le serveur 60 comporte deux modules de sécurisation : un module d'initialisation 30 et un module interface 40. Le module d'initialisation 30 comporte une unité de calcul tel qu'un microprocesseur 31 et une mémoire de travail 32, un module de communication 33, un module de vérification 35, et un module d'échange de sécurisation 34. Selon diverses variantes de réalisation, l'unité de calcul 31, tout comme la mémoire de travail 32 peuvent être centralisés pour l'ensemble du module de sécurisation 30, ou encore être agencés de façon externe, avec connexion aux différents modules, ou répartis au sein de chacun des modules communication 33, vérification 35 et échange de sécurisation 34. Le module de vérification 35 permet de vérifier l'identifiant, comme par exemple un identifiant inséré dans le message en provenance du module client, et une éventuelle signature des données du message. Le module 34 permet d'échanger des données spécifiques avec le module interface 40.

Le module interface 40 comporte une unité de calcul tel qu'un microprocesseur 41 et une mémoire de travail 42, un module de communication 43, un module de vérification 45, et un module d'échange de sécurisation 44. Selon diverses variantes de réalisation, l'unité de calcul 41, tout comme la mémoire de travail 42 peuvent être centralisés pour l'ensemble du module interface 40, ou encore être agencés de façon externe, avec connexion aux différents modules, ou répartis au sein de chacun des modules communication 43, vérification 45 et échange de sécurisation 44. Le module de vérification 45 permet de vérifier l'identifiant et une éventuelle signature des données du message. Le module 44 permet d'échanger des données spécifiques avec le module d'initialisation 30.

Le module serveur 60 comporte ou est relié à un module destinataire 50, lui aussi pourvu d'une unité de calcul tel qu'un microprocesseur 51 et une mémoire de travail 52, indépendants, ou partagés avec d'autre modules. Ce module est en général le destinataire final avec lequel le module client 20 entre en communication, soit pour valider le lancement d'une application, soit pour effectuer un échange de données. Un utilisateur 90, ayant accès au module client 20 par exemple au moyen d'une interface utilisateur, peut effectuer les manipulations prévues pour le lancement du procédé.

De manière préférentielle, chaque module comporte un module de cryptographie 25, 36, 47, afin d'augmenter le niveau de sécurité du système, par cryptage et/ou signature électronique de données des messages.

La mise en oeuvre des différents modules préalablement décrits (par exemple les modules 20, 30, 40) est avantageusement réalisée au moyen d'instructions de mise en oeuvre, permettant aux modules d'effectuer la ou les opérations spécifiquement prévues pour le module concerné. Les instructions peuvent être sous la forme d'un ou plusieurs logiciels ou modules de logiciels mis en oeuvre par un ou plusieurs microprocesseurs. Le ou les modules et/ou le ou les logiciels sont avantageusement prévus dans un produit programme d'ordinateur comprenant un support d'enregistrement ou médium d'enregistrement utilisable par un ordinateur et comportant un code programmé lisible par un ordinateur intégré dans ledit support ou medium, permettant à un logiciel applicatif son exécution sur un ordinateur ou autre dispositif comportant un microprocesseur tel qu'un téléphone de type « smartphone », ou autre.

La figure 3 montre une variante de réalisation dans laquelle l'utilisateur humain 90 de la figure 2 n'est pas requis. Le module client 20 prévoit alors un fonctionnement automatisé, ne nécessitant pas l'intervention d'un utilisateur externe ou humain, par exemple pour décider du lancement du procédé. Dans l'exemple de la figure 3, un module ou procédé automatisé, géré par le module client, gère automatiquement les opérations, de sorte que les échanges entre le module client 20 et le module serveur 60 sont effectuées de façon automatique, au moment opportun. Le module 20 peut être autonome, ou être intégré dans une entité plus complexe, tel qu'un ordinateur, une machine, un système, etc,. Il peut aussi être compris dans une entité physique simple tel qu'une carte à puce, une clé USB, un porte-clé, une tête de clé de voiture, etc.

Les figures 4 et 5 présentent des variantes de réalisation des figures 2 et 3, dans lesquelles les étapes détaillées du procédé selon l'invention sont représentées à l'aide de flèches numérotées de 1 à 13. Ces figures sont présentées plus en détails dans ce qui suit, en relation avec la figure 6. En outre, dans ces variantes de réalisation, les modules de cryptographie 25, 36 et 47 des différents modules offrent la possibilité de crypter et/ou de signer électroniquement le contenu des messages échangés.

La figure 6 présente le principe de base du procédé de sécurisation d'échange de données selon l'invention. A l'étape 101, le module client 20 envoie des données client à destination du module initialisation 30 du module serveur 60, tel que montré par la flèche 1 de la figure 2 ou de la figure 3. Les données client comportent au minimum un identifiant unique permettant d'identifier l'émetteur du message ou utilisateur. Dans une variante avantageuse, il contient par ailleurs un jeton, généré par le module jeton 24. Avant envoi, le jeton est connu uniquement par le module client. Les modules de communication 23 et 33 permettent de réaliser les liaisons de communication entre le module client 20 et le module d'initialisation 30.

Après réception des données client par le module d'initialisation 30 et vérification de l'identifiant de l'utilisateur, le module d'initialisation 30 et le module interface 40 échangent entre eux, à l'étape 102, des données de sécurisation. Cette étape est illustrée par les flèches 2 et 3 des figures 2 et 3. Le module d'initialisation 30 envoie au minimum les données d'identifiant au module interface 40. La réception de ces données par le module interface 40 indique que des données client ont été reçues par le module d'initialisation 30 en provenance de l'utilisateur correspondant à l'identifiant unique reçu. En réponse à cet envoi de données, le module interface 40 envoi au moins un jeton généré par un module jeton 46 (flèche 3 de la figure 2 ou de la figure 3).

A l'étape 103, le module d'initialisation 30 envoie des données de réponse au module client 20, tel que montré à la flèche 4 de la figure 2 ou de la figure 3. Ces données contiennent au moins un jeton généré (ou transformé ou réinitialisé) par le module jeton 46.

Après réception de ces données, le module client 20 envoie des données client à destination du module interface 40, à l'étape 104, illustrée par la flèche 5 de la figure 2 ou de la figure 3. Ces données contiennent au moins un jeton. Enfin, à l'étape 105, le module interface 40 envoie au module client 20 des données de réponse. Selon les modes de réalisation de l'invention, la nature et/ou le contenu de ces données peuvent varier en fonction des besoins. Par exemple, pour une configuration où le procédé vise à sécuriser un échange de données unique, les données de réponse du module interface 40 peuvent contenir les données demandées. Pour une configuration où le procédé vise à lancer de façon sécurisée une application donnée, la réponse peut consister en le lancement de ladite application elle-même. La flèche 8 des figures 2 et 3 illustre cette étape.

La figure 7 illustre schématiquement les étapes de réalisation d'une variante avantageuse du procédé présenté à la figure 6. A l'étape 201, le module client 20 envoie des données client à destination du module initialisation 30 du module serveur 60, tel que montré par la flèche 1 des figures 2 et 3. Les données client comportent au minimum un identifiant unique permettant d'identifier l'émetteur du message ou utilisateur. Dans une variante avantageuse, il contient par ailleurs un jeton, généré par le module jeton 24. Avant envoi, le jeton est connu uniquement par le module client 20. Les modules de communication 23 et 33 permettent de réaliser les liaisons de communication entre le module client 20 et le module d'initialisation 30.

Après réception des données client par le module d'initialisation 30, à l'étape 202, l'identifiant de l'utilisateur est vérifié. Si cet identifiant est reconnu et autorisé, le procédé se poursuit à l'étape 203, dans laquelle le module d'initialisation 30 et le module interface 40 échangent entre eux des données de sécurisation. Cette étape est illustrée par les flèches 2 et 3 des figures 2 et 3. Le module d'initialisation 30 envoie au minimum les données d'identifiant au module interface 40 et/ou un éventuel jeton d'initialisation en provenance du module client. La réception de ces données par le module interface 40 indique que des données client ont été reçues par le module d'initialisation 30 en provenance de l'utilisateur correspondant à l'identifiant reçu. En réponse à cet envoi de données, le module interface 40 envoi au moins un jeton généré ou modifié ou réinitialisé par le module jeton 46 du serveur (flèche 3 des figures 2 et 3).

A l'étape 204, le module d'initialisation 30 envoie des données serveur en réponse au module client 20, tel que montré à la flèche 4 des figures 2 et 3. Ces données contiennent au moins le jeton généré par le module jeton 46 du serveur.

Après réception de ces données en provenance du serveur, le module client 20 envoie des données client à destination du module interface 40, à l'étape 205, illustrée par la flèche 5 des figures 2 et 3. Ces données contiennent au moins le jeton préalablement reçu, de préférence transformé ou réinitialisé.

A l'étape 206, le module interface 40 reçoit les données client et vérifie le jeton, par exemple en effectuant une comparaison de compatibilité entre le jeton reçu et celui généré à l'étape 203. Si le jeton est acceptable, il est de préférence transformé ou réinitialisé.

A l'étape 207, le module interface 40 et le module destinataire 50 échangent entre eux des données (flèches 6 et 7 des figures 2 et 3). Selon les modes de réalisation de l'invention, la nature et/ou le contenu de ces échanges peut varier en fonction des besoins. Par exemple, pour une configuration où le procédé vise à sécuriser un échange unique de données, le module interface 40 sollicite le module destinataire 50 par une requête spécifique, et le module destinataire répond en envoyant les données pertinentes. Selon le cas, la réponse du module client peut comprendre les données de réponse à une requête, ou encore, pour une configuration où le procédé vise à lancer de façon sécurisée une application donnée, la réponse peut consister en le lancement de ladite application elle-même.

Les étapes suivantes peuvent varier, en fonction du destinataire des données de réponse du module client, et en fonction de la poursuite ou non des échanges pour une ou plusieurs boucles additionnelles.

L'étape 208 concerne le cas où les données de réponse du module destinataire 50 sont transmises directement vers le module client 20, tel que montré à la flèche 8'+ des figures 2 et 3, avec poursuite ou non des échanges, selon le cas. Dans une variante de réalisation, les données sont transmises à une entité tiers 400, avec poursuite ou non des échanges, tel que montré sur la figure en relation avec la flèche 8"+ et l'entité tiers 400. Dans une autre variante, les échanges de données avec une entité tiers 400 transitent par le module interface 40.

L'étape 209 concerne le cas où les données de réponse du module destinataire 50 sont transmises au module interface 40 avant d'être ensuite retransmises au module client 20, tel que montré par les flèches 7 et 8 des figures 2 et 3, avec poursuite ou non des échanges, selon le cas. L'étape 210 de la figure 7 illustre un exemple dans lequel les échanges ne sont pas poursuivis. L'étape 220 de la figure 7 illustre un exemple de poursuite des échanges. Le procédé se poursuit alors en reprenant à nouveau l'étape 205 de la figure 7, tel que présenté sur le diagramme.

La figure 8, en relation avec les figures 4 et 5, illustre schématiquement les étapes de réalisation d'une variante avantageuse du procédé. A la demande et/ou sous le contrôle d'un utilisateur 90 (figure 4) ou d'un module de commande 80 (figure 5), à l'étape 301, le module client 20 prépare et met en forme des données client à destination du module initialisation 30 du module serveur 60, tel que montré par la flèche 1 des figures 4 et 5. Les données client comportent un identifiant unique permettant d'identifier l'émetteur du message ou utilisateur, et un jeton généré par le module jeton 24. Avant envoi, le jeton est connu uniquement par le module client 20. Les modules de communication 23 et 33 permettent de réaliser les liaisons de communication entre le module client 20 et le module d'initialisation 30.

A l'étape 302, le module client 20 envoie les données client au module d'initialisation 30, tel que montré par la flèche 2 aux figures 4 et 5.

A l'étape 303, le module d'initialisation 30 reçoit les données client, vérifie l'identifiant, et si cet identifiant est reconnu et autorisé, il transmet l'identifiant et le jeton au module interface 40, comme montré par la flèche 3 des figures 4 et 5.

La réception de ces données par le module interface 40 est une indication fiable qu'un message client a été reçu par le module d'initialisation 30 en provenance de l'utilisateur correspondant à l'identifiant reçu. En réponse à cet envoi de données, à l'étape 304, le module interface 40 effectue les vérification de l'identifiant unique et/ou du jeton, et en cas d'acceptation, transforme ou réinitialise le jeton et l'envoie au module d'initialisation 30 (flèche 4 des figures 4 et 5).

A l'étape 305, le module d'initialisation 30 reçoit les données du module d'interface 40, prépare et met en forme les données comportant le jeton, et envoie les données au module client 20, tel que montré à la flèche 5 des figures 4 et 5.

A l'étape 306, le module client 20 reçoit les données, et en particulier le jeton, et vérifie le jeton.

A l'étape 307, facultative, le module client demande à l'utilisateur 90 ou au module de commande 80 un code utilisateur (par exemple un code NIP) et reçoit le données correspondant à ce code. Cet échange est symbolisé par les flèches 6 et 7 des figures 4 et 5.

A l'étape 308, le module client 20 prépare et formate les données client, cette fois-ci non pas pour le module d'initialisation 30, mais pour le module d'interface 40. Ces données comportent l'éventuel code utilisateur (NIP). Le jeton reçu du serveur est de préférence transformé ou réinitialisé et joint aux données à transmettre. Les données sont ensuite transmises au module interface 40. Ce transfert est symbolisé par la flèche 8 des figures 4 et 5. Dans une variante de réalisation, le jeton est transformé en y intégrant ou en utilisant le code utilisateur comme paramètre de transformation.

A l'étape 309, le module interface reçoit les données client, vérifie le jeton et l'éventuel code NIP, par exemple en effectuant une comparaison entre le jeton reçu et celui généré au préalable. Si les données sont acceptables, le jeton est de préférence transformé ou réinitialisé.

A l'étape 310, le module interface 40 et le module destinataire 50 échangent entre eux des données (flèches 9 et 10 des figures 4 et 5). Selon les modes de réalisation de l'invention, la nature et/ou le contenu de ces échanges peut varier en fonction des besoins. Par exemple, pour une configuration où le procédé vise à sécuriser un échange unique de données, le module interface 40 sollicite le module destinataire 50 par une requête spécifique, et le module destinataire répond en envoyant les données pertinentes. Selon le cas, la réponse du module client peut comprendre les données de réponse à une requête, ou encore, pour une configuration où le procédé vise à lancer de façon sécurisée une application donnée, la réponse peut consister en le lancement de ladite application elle-même.

Les étapes suivantes peuvent varier, en fonction du destinataire des données de réponse du module client, et en fonction de la poursuite ou non des échanges pour une ou plusieurs boucles additionnelles.

L'étape 311 concerne le cas où les données de réponse du module destinataire 50 sont transmises directement vers le module client 20, tel que montré à la flèche 11'+ de la figure 4 et la flèche 13+ de la figure 5, avec poursuite ou non des échanges, selon le cas. Dans une variante de réalisation, les données sont transmises à une entité tiers 400, avec poursuite ou non des échanges, tel que montré sur la figure 4 en relation avec la flèche 11"+ et l'entité tiers 400 et sur la figure 5 en relation avec la flèche 13"+ et l'entité tiers 400. Dans une autre variante, les échanges de données avec une entité tiers 400 transitent par le module interface 40. Dans une autre variante montrée à la figure 5, les échanges de données se poursuivent directement avec le module de commande 80, tel que montré par la flèche 13'+.

L'étape 312 concerne le cas où les données de réponse du module destinataire 50 sont transmises au module interface 40 avant d'être ensuite retransmises au module client 20, tel que montré par les flèches 10 et 11 des figures 4 et 5, avec poursuite ou non des échanges, selon le cas. L'étape 320 de la figure 8 illustre un exemple dans lequel les échanges ne sont pas poursuivis. L'étape 330 de la figure 8 illustre un exemple de poursuite des échanges. Le procédé se poursuit alors en reprenant à nouveau l'étape 306 de la figure 8, tel que présenté sur le diagramme.

La flèche 12 des figures 4 et 5 montre l'envoi subséquent des données pertinentes soit à l'utilisateur 90 ou au module de commande 80.

Dans une variante avantageuse, les données échangées sont signées et/ou cryptées par les modules de cryptographie 25, 36 et 47 prévus à cet effet au sein des différents modules.

La figure 9 montre de façon schématique un exemple d'application du procédé selon l'invention pour l'identification des véhicules à un poste de péage. Le module client 20, dans ce cas un module RFID placé dans un véhicule 600, circule dans une zone de péage 610 spécialement aménagée. On y retrouve un module initialisation 30, positionné à l'entrée de la zone, une module interface 40 , placé un peut en aval, et un module destinataire 50, placé près d'une barrière 620 de contrôle de passage des véhicules. Lorsqu'un véhicule 600 circule à proximité du module initialisation 30, les premiers échanges de données sont effectués entre le module client 20 et le module initialisation 30. Par exemple, l'identifiant ou numéro d'abonnement de péage du conducteur, ainsi qu'un jeton initialisation sont transmis au module initialisation 30. Le module initialisation 30 et le module interface 40 échangent ensuite entre eux les données pertinentes, tel qu'expliqué précédemment, et, si l'identifiant est reconnu, le jeton initialisation est transformé, puis transmis au module client 20. Le véhicule poursuit pendant ce temps son avancée dans le couloir 610 de péage, puis passe à proximité du module interface 40. Un échange entre le module client 20 du véhicule 600 et le module interface 40 peut alors être effectué. Par exemple, le module interface 40 reçoit le jeton serveur préalablement transmis pas le module initialisation 30. Si le jeton est accepté, le module destinataire 50 peut accepter le passage et commander l'ouverture de la barrière 620. Le module destinataire 50 peut ensuite générer les éventuelles transactions de péage, afin que le titulaire de l'abonnement identifié lors du passage puisse être facturé du montant correspondant. Dans cet exemple d'application, le procédé et le système selon l'invention permettent de sécuriser les données en relation avec le paiement électronique, en assurant la sécurité des données, et en permettant une mise en oeuvre rapide, pour que la circulation au niveau du poste de péage soit la plus fluide possible. L'utilisation de jetons entre les différents modules et les vérifications multiples permettent de déceler une éventuelle intrusion du type Homme du Milieu. Le procédé peut alors soit être interrompu, soit prévoir l'envoi d'une alerte d'intrusion.

La figure 10 montre de façon schématique un autre exemple d'application du procédé selon l'invention pour une utilisation d'un billet électronique, dans ce cas pour assurer l'ouverture d'une porte donnant accès à une zone à accès contrôlé. Il s'agit dans cet exemple de s'assurer que le titulaire du billet électronique est bien autorisé à accéder à une zone à accès contrôlé 710, comme par exemple une plate-forme d'embarquement d'une aérogare. Une zone de contrôle 700 en forme de couloir est complétée par la présence à l'entrée d'un module initialisation 30 et vers la sortie, d'un module interface 40, aptes à échanger entre eux des données de sécurisation. Un module client 20, dans cet exemple prévu dans le téléphone portable d'un utilisateur 90 envoie les données du billet électronique au module d'initialisation 30 prévu près de l'entrée d'une première zone de contrôle. Dans cet exemple, cette première zone permet à un agent de sécurité de procéder aux contrôles d'usage avant de pouvoir accéder à un avion. Après réception par le module d'initialisation 30, les données du billet sont transmises au module interface 40. Si les données sont acceptables, un jeton est envoyé au module client 20, qui communique ensuite avec le module interface 40. Si les données sont validées, la porte 720 est déverrouillée pour permettre au passager d'accéder à la zone restreinte 710. Le module 50 peut enregistrer le fait que le passager est bien présent en zone restreinte, et pourra se présenter à son avion en temps opportun. Dans cet exemple d'application, le procédé et le système selon l'invention permettent de sécuriser les données en relation avec l'authentification d'un détenteur de billet électronique, et facilitent la gestion et l'utilisation automatisées du billet.

La figure 11 montre de façon schématique un autre exemple d'application du procédé selon l'invention pour une application de paiement sécurisé à une caisse d'un supermarché ou autre type de commerce. Au moment de passer à la caisse, un utilisateur 90 présente un module client 20, dans cet exemple prévu dans une carte de paiement. Les données d'identifiant sont transmises au module d'initialisation 30, en relation avec un module interface 40, dans cet exemple prévu en relation avec un dispositif électronique de paiement. Si les données d'identifiant sont acceptés, le montant à payer est transmis au module client 20. L'utilisateur confirme son accord de paiement en entrant un code personnel (code NIP) par exemple à l'aide d'un clavier prévu à cet effet. Après validation des données, le paiement peut être effectué, en relation avec le module destinataire 50, par exemple une centrale de paiement du commerce, qui peut, au besoin, communiquer avec un tiers, par exemple pour débiter un compte de l'utilisateur. Un reçu de paiement peut ensuite être transmis au module client 20 pour terminer la transaction. Dans cet exemple d'application, le procédé et le système selon l'invention permettent de sécuriser les données en relation avec le paiement, d'éviter qu'un utilisateur tiers 95 paye de façon non intentionnelle à la place de l'utilisateur 90, ou qu'un utilisateur 90 paye une transaction autre que celle prévue, par exemple au bénéfice d'un tiers 95 à proximité de la zone de paiement.

De multiples autres types d'applications, non illustrées, sont par ailleurs possibles. Par exemple, pour assurer le paiement sécurisé de films ou d'émissions de télévision, pour assurer des échanges de données confidentielles entre deux serveurs. Dans un tel cas, les données confidentielles sont par exemple au niveau du module destinataire 50, en vue d'une transmission sécurisée au module 20. Dans le domaine de la domotique, le procédé et le système selon l'invention peuvent servir à surveiller un site pour détecter une éventuelle intrusion, pour commander des éléments domotiques tels que climatisation ou chauffage, des volets, des éclairages, etc.

Selon les applications, un module client 20 peut être intégré ou associé à divers types de dispositifs, comme par exemple un ordinateur, un téléphone portable, une carte à puce, une clé USB avec microprocesseur, une étiquette intelligente. Il est à noter que le module client 20 ne comporte pas obligatoirement d'alimentation électrique intégrée.

Les Figures et leurs descriptions faites ci-dessus illustrent l'invention plutôt qu'elles ne la limitent. En particulier, l'invention et ses différentes variantes viennent d'être décrites en relation avec un exemple particulier comportant des modules initialisation 30, interface 40 et destinataire 50 indépendants.

Néanmoins, il est évident pour un homme du métier que l'invention peut être étendue à d'autres modes de réalisation dans lesquels en variantes, on prévoit que le module destinataire 50 est joint ou intégré au module interface 40. Encore selon une autre variante, les trois modules sont intégrés ou joints, bien que le mode de fonctionnement du procédé reste similaire à celui préalablement décrit. Selon une variante du procédé selon l'invention, après un premier échange de données entre le module client 20 et le module initialisation 30, un échange additionnel de données a lieu, entre le module initialisation et le module destinataire 50. Par exemple, dans le mode de réalisation illustré à la figure 10, un tel échange avec le module destinataire pourrait servir à actionner l'ouverture de la première porte, pour un premier niveau de sécurisation. Le procédé se poursuit ensuite avec les échanges de données entre le module initialisation 30 et le module client 20, puis vers le module interface 40, tel que préalablement décrit.

Les signes de références dans les revendications n'ont aucun caractère limitatif. Les verbes "comprendre" et "comporter" n'excluent pas la présence d'autres éléments que ceux listés dans les revendications. Le mot "un" précédant un élément n'exclue pas la présence d'une pluralité de tels éléments.

## Revendications

1. Procédé de sécurisation d'échange de données entre un module client (20) comportant un module jeton (24), un module serveur (60) et un module destinataire (50), dans lequel le module serveur (60) comporte un ensemble de modules de sécurisation comportant au moins un premier et un second modules de sécurisation (30, 40), le procédé comportant les étapes dans lesquelles :
- le module jeton (24) du module client initialise un jeton et le module client (20) envoie des données comprenant un identifiant unique et le jeton initialisé à un premier module de sécurisation (30) du module serveur ;
- le premier module de sécurisation (30) du module serveur reçoit les données et vérifie l'identifiant unique et le jeton reçu ;
- le premier module de sécurisation (30) et le second module de sécurisation (40) échangent bilatéralement entre eux des données de sécurisation ;
- le module serveur (60) transforme le jeton reçu ;
- le premier module de sécurisation (30) du module serveur envoie des données contenant le jeton transformé au module client ;
- le module client (20) reçoit les données serveur contenant le jeton transformé, vérifie le jeton et, s'il est accepté, transforme ce dernier une nouvelle fois ;
- le module client (20) envoie des données comportant l'identifiant unique et le jeton transformé au second module de sécurisation (40) du module serveur ;
- le second module de sécurisation (40) du module serveur reçoit les données, vérifie l'identifiant et le jeton transformé ;
- le second module de sécurisation (40) communique avec le module destinataire (50) ;
- le module destinataire (50) répond.

2. Procédé de sécurisation d'échange de données selon la revendication 1, dans lequel le module destinataire (50) répond au second module de sécurisation (40) qui transmet les données pertinentes au module client (20).

3. Procédé de sécurisation d'échange de données selon la revendication 1, dans lequel le module destinataire (50) répond directement au module client (20).

4. Procédé de sécurisation d'échange de données selon l'une des revendications 1 à 3, dans lequel le jeton est initialisé ou transformé par le second module de sécurisation de données (40) et transmis au premier module de sécurisation de données (30).

5. Procédé de sécurisation d'échange de données selon l'une des revendications 1 à 4, dans lequel après réception par un module d'un jeton, ce dernier est transformé ou réinitialisé.

6. Procédé de sécurisation d'échange de données selon l'une des revendications 1 à 5, dans lequel les données échangées entre le module client (20) et le module serveur (60) comportent une signature électronique.

7. Procédé de sécurisation d'échange de données selon l'une des revendications 1 à 6, dans lequel, après l'envoi des données destinataire au module client (20), ledit module client effectue au moins un autre envoi des données au second module de sécurisation de données (40) du module serveur.

8. Procédé de sécurisation d'échange de données selon la revendication 6, dans lequel, lors d'une itération entre le module client (20) et le second module de sécurisation de données (40), les dernières données envoyées du destinataire comportent un jeton distinct du jeton précédent.

9. Procédé de sécurisation d'échange de données selon l'une des revendications 7 ou 8, dans lequel le module client et le second module de sécurisation de données du module serveur échangent tour à tour des données, avec à chaque boucle d'échange, un échange intermédiaire entre le second module de sécurisation de données et le module destinataire.

10. Procédé de sécurisation d'échange de données selon l'une des revendications 1 à 6, dans lequel le module client et le module destinataire échangent tour à tour des données.

## Patentansprüche

1. Verfahren zur Sicherung eines Datenaustauschs zwischen einem Clientmodul (20) mit einem Token-Modul (24), einem Servermodul (60) und einem Empfangsmodul (50), worin das Servermodul (60) eine Vielzahl von Sicherungsmodulen umfasst, mit mindestens einem ersten und einem zweiten Sicherungsmodul (30, 40), wobei das Verfahren die folgenden Schritte umfasst, worin:
- das Token-Modul (24) des Clientmoduls ein Token initialisiert, und das Clientmodul (20) die Daten mit einer einmaligen Kennung und dem initialisierten Token an ein erstes Sicherungsmodul (30) des Servermoduls sendet;
- das erste Sicherungsmodul (30) des Servermoduls empfängt die Daten und überprüft die einmalige Kennung und das erhaltene Token;
- das erste Sicherungsmodul (30) und das zweite Sicherungsmodul (40) tauschen bilateral zwischen ihnen die Sicherungsdaten;
- das Servermodul (60) wandelt das erhaltene Token um;
- das erste Sicherungsmodul (30) des Servermoduls sendet die Daten mit dem umgewandelten Token an das Clientmodul;
- das Clientmodul (20) empfängt die das umgewandelte Token enthaltenden Serverdaten, überprüft das Token, und falls es akzeptiert wird, wandelt Letzteres nochmals um;
- das Clientmodul (20) sendet die Daten mit der einmaligen Kennung und dem umgewandelten Token an das zweite Sicherungsmodul (40) des Servermoduls;
- das zweite Sicherungsmodul (40) des Servermoduls empfängt die Daten, überprüft die Kennung und das umgewandelte Token;
- das zweite Sicherungsmodul (40) kommuniziert mit dem Empfangsmodul (50);
- das Empfangsmodul (50) antwortet.

2. Verfahren zur Sicherung eines Datenaustauschs gemäss Anspruch 1, worin das Empfangsmodul (50) dem zweiten Sicherungsmodul (40) antwortet, welches die relevanten Daten dem Clientmodul (20) übermittelt.

3. Verfahren zur Sicherung eines Datenaustauschs gemäss Anspruch 1, worin das Empfangsmodul (50) dem Clientmodul (20) direkt antwortet.

4. Verfahren zur Sicherung eines Datenaustauschs gemäss einem der Ansprüche 1 bis 3, worin das Token durch das zweite Datensicherungsmodul (40) initialisiert oder umgewandelt und an das erste Datensicherungsmodul (30) übermittelt wird.

5. Verfahren zur Sicherung eines Datenaustauschs gemäss einem der Ansprüche 1 bis 4, worin nach dem Empfang eines Tokens durch ein Modul, das Token umgewandelt oder neuinitialisiert wird.

6. Verfahren zur Sicherung eines Datenaustauschs gemäss einem der Ansprüche 1 bis 5, worin die zwischen dem Clientmodul (20) und dem Servermodul (60) ausgetauschten Daten eine elektronische Unterschrift aufweisen.

7. Verfahren zur Sicherung eines Datenaustauschs gemäss einem der Ansprüche 1 bis 6, worin nach dem Senden der Empfangsdaten an das Clientmodul (20), das besagte Clientmodul mindestens eine weitere Sendung der Daten an das zweite Datensicherungsmodul (40) des Servermoduls durchführt.

8. Verfahren zur Sicherung eines Datenaustauschs gemäss Anspruch 6, worin während einer Iteration zwischen dem Clientmodul (20) und dem zweiten Datensicherungsmodul (40) die letzten an den Empfänger gesandten Daten ein vom vorherigen Token verschiedenes Token umfassen.

9. Verfahren zur Sicherung eines Datenaustauschs gemäss einem der Ansprüche 7 oder 8, worin das Clientmodul und das zweite Datensicherungsmodul des Servermoduls abwechselnd Daten austauschen, wobei an jeder Austauschschleife ein Zwischenaustausch zwischen dem zweiten Datensicherheitsmodul und dem Empfangsmodul stattfindet.

10. Verfahren zur Sicherung eines Datenaustauschs gemäss einem der Ansprüche 1 bis 6, worin das Clientmodul und das Empfangsmodul abwechselnd Daten austauschen.

## Claims

1. A method for securing data exchanges between a client module (20) comprising a token module (24), a server module (60) and a recipient module (50), wherein the server module (60) comprises a set of security modules (30, 40) having at least a first and a second security module (30, 40), the method comprising the steps of:
- the token module (24) of the client module initialises a token and the client module (20) sends data comprising a unique identifier and the initialised token to a first security module (30) of the server module;
- the first security module (30) of the server module receives the data and verifies the unique identifier and the received token;
- the first security module (30) and the second security module (40) exchange security data bilaterally between them;
- the server module (60) transforms the received token;
- the first security module (30) of the server module sends data containing the transformed token to the client module;
- the client module (20) receives the server data containing the transformed token, checks the token and, if accepted, transforms the token a further time;
- the client module (20) sends data comprising the unique identifier and the transformed token to the second security module (40) of the server module;
- the second security module (40) of the server module receives the data, verifies the identifier and the transformed token;
- the second security module (40) communicates with the recipient module (50);
- the recipient module (50) responds.

2. Method for securing data exchanges according to claim 1, wherein the recipient module (50) responds to the second security module (40) that transmits the relevant data to the client module (20).

3. Method for securing data exchanges according to claim 1, wherein the recipient module (50) responds directly to the client module (20).

4. Method for securing data exchanges according to one of the claims 1 to 3, wherein the token is initialized or transformed by the second data security module (40) and transmitted to the first data security module (30).

5. Method for securing data exchanges according to one of the claims 1 to 4, wherein after a module has received a token, the latter is transformed or reinitialised.

6. Method for securing data exchanges according to one of the claims 1 to 5, wherein the data exchanged between the client module (20) and the server module (60) comprise an electronic signature.

7. Method for securing data exchanges according to one of the claims 1 to 6, wherein after the recipient data is sent to the client module (20), said client module performs at least one further data transmission to the second data security module (40) of the server module.

8. Method for securing data exchanges according to claim 6, wherein during an iteration between the client module (20) and the second data securing module (40), the last data sent from the recipient comprise a token distinct from the previous token.

9. Method for securing data exchanges according to one of the claims 7 or 8, wherein the client module and the second data security module of the server module exchange data in turns, wherein at each exchange loop, there is an intermediary exchange between the second data securing module and the recipient module.

10. Method for securing data exchanges according to one of the claims 1 to 6, wherein the client module and the recipient module exchange data in turns.
